# EUROPEAN PATENT APPLICATION

(11) **EP 4 837 983 A1**
(43) Date of publication of application: **11.11.2026**
(21) Application number: 25789739.7
(22) Date of filing: 04.04.2025
(51) Int. Cl.: C21D 8/12, C22C 38/00, C22C 38/06, C22C 38/60, H01F 1/147

(54) **METHOD FOR MANUFACTURING ORIENTED ELECTROMAGNETIC STEEL SHEET**

(30) Priority: 16.04.2024 JP 2024066413
(71) Applicant: JFE Steel Corporation, Tokyo 100-0011 (JP)
(72) Inventor: TANAKA, Takaaki, Tokyo 100-0011 (JP); TAKAHASHI, Mari, Tokyo 100-0011 (JP); SHINGAKI, Yukihiro, Tokyo 100-0011 (JP)
(74) Representative: Scott, Stephen John
(86) International application number: PCT/JP2025/013832
(87) International publication number: WO 2025/220520

(57) **Abstract**

Provided is method of producing a grain-oriented electrical steel sheet that has excellent magnetic properties and can decrease the heating temperature of the steel slab to 1300 °C or lower. The method includes hot rolling, hot-rolled sheet annealing, cold rolling, primary recrystallization annealing, and secondary recrystallization annealing of a steel slab. In the hot-rolled sheet annealing, the hot-rolled steel sheet is subjected to a first stage soaking, at least once, by holding at a soaking temperature of 350 °C or higher and 1000 °C or lower for a soaking time of 3.5 s or longer and 120 s or shorter, and the hot-rolled steel sheet is subjected to a second stage soaking by holding at a soaking temperature higher than 1000 °C and 1100 °C or lower.

## Description

### TECHNICAL FIELD

The present disclosure relates to methods of producing grain-oriented electrical steel sheets.

### BACKGROUND

Grain-oriented electrical steel sheets are a soft magnetic material that aligns an easy magnetization axis in the rolling direction by utilizing secondary recrystallization to concentrate the crystal orientation of Fe-Si polycrystal in the {110}<001> orientation (hereinafter referred to as "Goss orientation"). Grain-oriented electrical steel sheets are primarily used as core material for electrical devices such as transformers due to having low iron loss at commercial frequencies and an ability to achieve high magnetic flux density at low excitation fields. The iron loss of a grain-oriented electrical steel sheet is expressed as the sum of hysteresis loss, which depends on crystal orientation, steel sheet purity, and the like, and eddy current loss, which depends on thickness, specific resistance, size of magnetic domains, and the like. A method to decrease hysteresis loss is known, which involves increasing the integration degree towards Goss orientation to improve magnetic flux density. Methods to decrease eddy current loss include increasing the content of elements such as Si to enhance electrical resistance, decreasing the thickness of the steel sheet, and refining magnetic domains.

Among these methods to decrease iron loss, a method has been industrially implemented that enhances the integration degree towards Goss orientation of a grain-oriented electrical steel sheet by differentiating the mobility of grain boundaries during final annealing using precipitates called inhibitors. In Patent Literature (PTL) 1, a method using AlN as an inhibitor is described, while in PTL 2, a method using MnS and MnSe as inhibitors is described. According to these methods, it is necessary to heat a steel slab to a high temperature above 1300 °C to completely dissolve the component elements constituting inhibitors in the steel. As a result, there were challenges in terms of energy consumption for high-temperature heating and costs associated with apparatus.

In response to these challenges, in PTL 3, a method is described that makes apparent the dependence of grain boundary energy on grain boundary misorientation angle during primary recrystallization through high purity of the material and the action of trace nitrogen, allowing for secondary recrystallization of grains with Goss orientation without using inhibitors. Further, in PTL 4, a method is described of producing a grain-oriented electrical steel sheet having excellent magnetic properties and a chemical composition that does not positively utilize inhibitors and in which Al, S, N, and Se, elements capable of forming inhibitors, are excluded as much as possible, by utilizing these elements that cannot be completely removed in industrial-scale production. This method is said to achieve excellent magnetic properties by conducting hot-rolled sheet annealing with an average heating rate of 50 °C/s or more from room temperature to 400 °C, keeping the time to reach 900 °C from 400 °C to 100 s or shorter, and soaking at a temperature of 950 °C or higher.

### CITATION LIST

### Patent Literature

PTL 1: JP S40-015644 B1
PTL 2: JP S49-61019 A
PTL 3: JP 2000-129356 A
PTL 4: JP 2017-160489 A

### Non-Patent Literature

NPL 1: J. Kunze, Pungun O, and K. Friedrich, Journal of Materials Science Letters 5 (1986) pp. 815-818

### SUMMARY

### (Technical Problem)

The methods of producing grain-oriented electrical steel sheets described in PTL 3 and PTL 4 have successfully decreased the heating temperature of steel slabs to 1300 °C or lower by not utilizing inhibitors at all or by not actively utilizing inhibitors. However, since these grain-oriented electrical steel sheets do not actively utilize inhibitors, there are cases where the integration degree towards Goss orientation is not necessarily sufficient compared to conventional grain-oriented electrical steel sheets that actively utilize inhibitors, and there is room for improvement.

The present disclosure is made in view of the above challenges, and it would be helpful to provide a method of producing a grain-oriented electrical steel sheet that excels in integration degree towards Goss orientation and magnetic properties while decreasing the heating temperature of the steel slab to 1300 °C or lower.

### (Solution to Problem)

Among methods of producing a grain-oriented electrical steel sheets described in PTL 4, the inventors explored novel heat treatment conditions to further enhance the integration degree towards Goss orientation and stably obtain excellent magnetic properties for hot-rolled steel sheets obtained through hot rolling, specifically regarding hot-rolled sheet annealing. As a result, it was discovered that by conducting at least one short soaking time in a temperature range from 350 °C to 1000 °C before conventional soaking, it is possible to produce a grain-oriented electrical steel sheet that has excellent magnetic properties, leading to the present disclosure.

Primary features of the present disclosure are as follows.
[1] A method of producing a grain-oriented electrical steel sheet, the method comprising:
   preparing a steel slab having a chemical composition containing (consisting of), in mass ratio,
   C: 0.0020 % or more and 0.100 % or less,
   Si: 2.0 % or more and 6.5 % or less,
   Mn: 0.020 % or more and 1.00 % or less,
   sol. Al: 10 ppm or more and less than 100 ppm,
   N: 10 ppm or more and 50 ppm or less, and
   S: 10 ppm or more and 50 ppm or less,
   with the balance being Fe and inevitable impurity;
   after heating the steel slab to a temperature of 1300 °C or lower, subjecting the steel slab to hot rolling to obtain a hot-rolled steel sheet;
   subjecting the hot-rolled steel sheet to hot-rolled sheet annealing to obtain a hot-rolled and annealed sheet;
   subjecting the hot-rolled and annealed sheet to cold rolling once or twice or more with intermediate annealing, to obtain a cold-rolled steel sheet having a final sheet thickness;
   subjecting the cold-rolled steel sheet to primary recrystallization annealing to obtain a primary recrystallization annealed sheet; and
   after applying an annealing separator to a surface of the primary recrystallization annealed sheet, subjecting the primary recrystallization annealed sheet to secondary recrystallization annealing,
   wherein, in the hot-rolled sheet annealing,
      the hot-rolled steel sheet is subjected to a first stage soaking, at least once, by holding at a soaking temperature of 350 °C or higher and 1000 °C or lower for a soaking time of 3.5 s or longer and 120 s or shorter, and
      the hot-rolled steel sheet is subjected to a second stage soaking by holding at a soaking temperature higher than 1000 °C and 1100 °C or lower.
[2] The method of producing a grain-oriented electrical steel sheet according to [1], wherein, in the hot-rolled sheet annealing, an average heating rate when heating the hot-rolled steel sheet from 50 °C to 350 °C is set to 50 °C/s or more.
[3] The method of producing a grain-oriented electrical steel sheet according to [1] or [2], wherein the chemical composition further contains, in mass ratio, one or more selected from the group consisting of
   Sb: 0.01 % or more and 0.50 % or less,
   Sn: 0.01 % or more and 0.50 % or less,
   Ni: 0.005 % or more and 1.5 % or less,
   Cu: 0.005 % or more and 1.5 % or less,
   Cr: 0.005 % or more and 0.10 % or less,
   P: 0.005 % or more and 0.50 % or less,
   Mo: 0.005 % or more and 0.50 % or less,
   Ti: 0.0005 % or more and 0.10 % or less,
   Nb: 0.0005 % or more and 0.10 % or less,
   Bi: 0.005 % or more and 0.10 % or less,
   Se: 10 ppm or more and 50 ppm or less,
   Ca: 0.0005 % or more and 0.0050 % or less,
   B: 0.0001 % or more and 0.0020 % or less,
   V: 0.0005 % or more and 0.10 % or less,
   Pb: 0.0002 % or more and 0.050 % or less,
   As: 0.0005 % or more and 0.010 % or less, and
   Zn: 0.0005 % or more and 0.010 % or less.

### (Advantageous Effect)

According to the production method of the present disclosure, it is possible to decrease the heating temperature of the steel slab to 1300 °C or lower by using a chemical composition containing trace amounts of sol. Al, N, and S, which are elements that form inhibitors. Further, by carrying out two stages of soaking during the hot-rolled sheet annealing of the hot-rolled steel sheet, it is possible to produce a grain-oriented electrical steel sheet having excellent magnetic properties.

### BRIEF DESCRIPTION OF THE DRAWINGS

In the accompanying drawings:
FIG. 1 is a graph for explaining a temperature profile of hot-rolled sheet annealing;
FIG. 2 is a graph illustrating a relationship between first stage soaking temperature and magnetic flux density;
FIG. 3 is a graph illustrating a relationship between first stage soaking time and magnetic flux density; and
FIG. 4 is a graph illustrating a relationship between first stage soaking temperature, soaking time, and magnetic flux density.

### DETAILED DESCRIPTION

Embodiments of the present disclosure are described in detail below.

According to an embodiment, the present disclosure provides a method of producing a grain-oriented electrical steel sheet, the method comprising:
preparing a steel slab having a chemical composition containing (consisting of), in mass ratio,
C: 0.0020 % or more and 0.100 % or less,
Si: 2.0 % or more and 6.5 % or less,
Mn: 0.020 % or more and 1.00 % or less,
sol. Al: 10 ppm or more and less than 100 ppm,
N: 10 ppm or more and 50 ppm or less, and
S: 10 ppm or more and 50 ppm or less,
with the balance being Fe and inevitable impurity;
after heating the steel slab to a temperature of 1300 °C or lower, subjecting the steel slab to hot rolling to obtain a hot-rolled steel sheet;
subjecting the hot-rolled steel sheet to hot-rolled sheet annealing to obtain a hot-rolled and annealed sheet;
subjecting the hot-rolled and annealed sheet to cold rolling once or twice or more with intermediate annealing, to obtain a cold-rolled steel sheet having a final sheet thickness;
subjecting the cold-rolled steel sheet to primary recrystallization annealing to obtain a primary recrystallization annealed sheet; and
after applying an annealing separator to a surface of the primary recrystallization annealed sheet, subjecting the primary recrystallization annealed sheet to secondary recrystallization annealing,
wherein, in the hot-rolled sheet annealing,
   the hot-rolled steel sheet is subjected to a first stage soaking, at least once, by holding at a soaking temperature of 350 °C or higher and 1000 °C or lower for a soaking time of 3.5 s or longer and 120 s or shorter, and
   the hot-rolled steel sheet is subjected to a second stage soaking by holding at a soaking temperature higher than 1000 °C and 1100 °C or lower.

### <Chemical composition>

The following describes the content of elements contained in the steel slab prepared according to the embodiment described above. Hereinafter, the content of elements is expressed in mass ratio. The sign "%" indicates percentage by mass ratio. The sign "ppm" indicates parts per million by mass ratio.

### 1. Essential components

### C: 0.0020 % or more and 0.100 % or less

C is an element necessary to prevent brittle fracture when the steel is heated to high temperatures. When C content is 0.0020 % or more, embrittlement at high temperatures is suppressed, and therefore brittle fracture of the steel slab during casting and hot rolling can be prevented. When the C content is 0.100 % or less, the C content can be decreased to 0.005 % or less by decarburization treatment. This allows for the avoidance of magnetic aging caused by incomplete decarburization. The C content is therefore 0.0020 % or more and 0.100 % or less. The C content is preferably 0.020 % or more.

### Si: 2.0 % or more and 6.5 % or less

Si is an element necessary to increase specific resistance of the steel and decrease iron loss. When Si content is 2.0 % or more, this is effective in decreasing iron loss. When the Si content is 6.5 % or less, hot rolling and cold rolling can be easily carried out. The Si content is therefore 2.0 % or more and 6.5 % or less. The Si content is preferably 2.5 % or more. The Si content is preferably 4.0 % or less.

### Mn: 0.020 % or more and 1.00 % or less

Mn is an element necessary to improve the hot workability of the steel. When Mn content is 0.020 % or more, the hot workability is improved. When the Mn content is 1.00 % or less, the magnetic flux density of the grain-oriented electrical steel sheet does not greatly decrease. The Mn content is therefore 0.020 % or more and 1.00 % or less. The Mn content is preferably 0.040 % or more. The Mn content is preferably 0.30 % or less.

### sol. Al: 10 ppm or more and less than 100 ppm

Al is an important element in grain-oriented electrical steel sheets as it functions as an inhibitor by forming AlN through the combination with N dissolved in the steel, thereby suppressing normal grain growth of primary recrystallized grains during primary recrystallization annealing. However, for AlN to function as an inhibitor, it is necessary to prevent the segregation of Al in the steel slab and to uniformly dissolve Al in the steel. According to conventional technology, Al content was set to 100 ppm or more for the purpose of actively utilizing AlN as an inhibitor. In such a case, it was necessary to heat the steel slab to a high temperature exceeding 1300 °C to dissolve Al in the steel.

According to the present disclosure, AlN is also utilized as an inhibitor, but acid-soluble Al content in the steel slab is set to 10 ppm or more and less than 100 ppm, resulting in a smaller amount of AlN compared to conventional technology. The heating temperature for dissolving Al is therefore sufficient at 1300 °C or lower. Al is classified as acid-soluble Al or acid-insoluble Al based on the difficulty of acid dissolution. Acid-soluble Al is utilized to improve the properties of the steel sheets by being contained in the form of dissolved Al or AlN in the steel. Acid-insoluble Al is contained in the steel in forms such as Al₂O₃, but its impact on properties is minimal due to the trace amount. Therefore, the present disclosure specifies the acid-soluble Al content.

When the acid-soluble Al (hereinafter referred to as "sol. Al") content is 10 ppm or more, the necessary amount of AlN precipitates as the above-mentioned inhibitor, improving the magnetic flux density of the steel sheet. When the sol. Al content is less than 100 ppm, as mentioned above, Al can be dissolved in the steel slab by heating at 1300 °C or lower. The sol. Al content is therefore set to 10 ppm or more and less than 100 ppm. The sol. Al content is preferably 80 ppm or less. The sol. Al content in the steel slab can be measured using methods specified in Japanese Industrial Standard JIS G 1257-10-2 (2013) or other known methods.

### N: 10 ppm or more and 50 ppm or less

As mentioned above, N combines with Al and precipitates to form the inhibitor AlN. When N content is 10 ppm or more, the necessary amount of AlN precipitates as the above-mentioned inhibitor, improving the magnetic flux density of the steel sheet. When the N content is 50 ppm or less, there is no risk of N contained in the steel slab separating as nitrogen gas and causing swelling during hot rolling. The N content is therefore set to 10 ppm or more and 50 ppm or less. The N content is preferably 25 ppm or less.

### S: 10 ppm or more and 50 ppm or less

S combines with Mn to form MnS. When S is 10 ppm or more, the formed MnS functions as an inhibitor, improving the magnetic flux density of the steel sheet. When S is 50 ppm or less, it is possible to prevent a decrease in function associated with Ostwald ripening of the above-mentioned inhibitor. The S content is therefore set to 10 ppm or more and 50 ppm or less. The S content is preferably 25 ppm or less.

The chemical composition of the steel slab prepared according to the embodiment described above consists of the elements described above, with the balance being Fe and inevitable impurity.

### 2. Additive components

According to a preferred embodiment, in the method of producing a grain-oriented electrical steel sheet, the chemical composition further contains, in mass ratio, one or more selected from the group consisting of
Sb: 0.01 % or more and 0.50 % or less,
Sn: 0.01 % or more and 0.50 % or less,
Ni: 0.005 % or more and 1.5 % or less,
Cu: 0.005 % or more and 1.5 % or less,
Cr: 0.005 % or more and 0.10 % or less,
P: 0.005 % or more and 0.50 % or less,
Mo: 0.005 % or more and 0.50 % or less,
Ti: 0.0005 % or more and 0.10 % or less,
Nb: 0.0005 % or more and 0.10 % or less,
Bi: 0.005 % or more and 0.10 % or less,
Se: 10 ppm or more and 50 ppm or less,
Ca: 0.0005 % or more and 0.0050 % or less,
B: 0.0001 % or more and 0.0020 % or less,
V: 0.0005 % or more and 0.10 % or less,
Pb: 0.0002 % or more and 0.050 % or less,
As: 0.0005 % or more and 0.010 % or less, and
Zn: 0.0005 % or more and 0.010 % or less.

These elements are all useful for improving the magnetic properties. When the content is at least at the lower limit of the above range, an improvement effect on the magnetic properties can be obtained. When the content is no more than the upper limit of the above range, the formation of texture by secondary recrystallization is not hindered. Among the additive components, Se combines with Mn to form MnSe. When Se is 10 ppm or more, the formed MnSe functions as an inhibitor, improving the magnetic flux density of the steel sheet. When Se is 50 ppm or less, it is possible to prevent a decrease in function associated with Ostwald ripening of the above-mentioned inhibitor. The Se content is therefore preferably 10 ppm or more. The Se content is therefore preferably 50 ppm or less. The Se content is more preferably 25 ppm or less.

Next, the production conditions for the grain-oriented electrical steel sheet according to the above embodiment are described.

### <Steel slab>

The method of producing a grain-oriented electrical steel sheet according to the present disclosure first includes preparing a steel slab having the chemical composition described above. The steel slab can be prepared by a typical production method. The steel slab can be produced by ingot casting, where molten steel having a defined adjusted composition is poured into a mold and then cooled to solidify. Alternatively, the steel slab may be produced by continuous casting, where molten steel is first received in a tundish and then poured into a water-cooled mold to solidify, continuously drawing steel slabs from the bottom of the mold. The method of producing the steel slab prepared according to the present disclosure may be any of the methods described above.

Among the essential components mentioned above, the C, Si, and Mn content can be adjusted by changing the mix proportion of the raw materials used to produce molten steel in various steelmaking furnaces. The C, Si, and Mn content can be further adjusted, as needed, by adding additional additives to the molten steel received in the ladle from the steelmaking furnace. The additive components mentioned above are also preferably added to the molten steel received in the ladle, as it is difficult to add them during steelmaking.

On the other hand, among the essential components mentioned above, the sol. Al, N, and S content is often already included as inevitable impurity in the raw material used to produce the molten steel. When the sol. Al, N, and S content originally contained in the molten steel meet the numerical ranges specified in the present disclosure, it is possible to produce the steel slab without adjusting the content of these essential components. When the sol. Al, N, or S content is less than the corresponding lower limit described above, the content can be adjusted to be at least the lower limit by adding an additional additive to the molten steel received in the ladle.

Among the essential components mentioned above, ferrosilicon and ferromanganese may be used as raw materials for Si and Mn. When the amounts of C and S contained in ferrosilicon and ferromanganese are high, there is a risk that the amounts of C and S in the steel slab may exceed the corresponding upper limits. In such a case, it is preferable to use high-purity ferrosilicon and ferromanganese with low C and S content for molten steel component adjustment.

### <Hot rolling>

The method of producing a grain-oriented electrical steel sheet according to the present disclosure includes heating the prepared steel slab to a temperature of 1300 °C or lower, followed by subjecting the steel slab to hot rolling to produce a hot-rolled steel sheet. As mentioned above, in the method of producing a grain-oriented electrical steel sheet according to the present disclosure, the content of sol. Al, N, and S, which are elements that form inhibitors in the chemical composition of the steel slab, is kept low. Therefore, even when the heating temperature of the steel slab is 1300 °C or lower, these elements can be sufficiently dissolved in the steel, thus decreasing the cost associated with heating the steel slab. The heating temperature of the steel slab is preferably 1100 °C or higher. Known means such as gas furnaces, induction heating furnaces, and electric furnaces can be used as the means for heating the steel slab.

In the hot rolling of the heated steel slab, from the perspective of microstructure control of the hot-rolled steel sheet, it is preferable to first carry out rough rolling for one pass or more at a temperature of 1100 °C or higher and 1300 °C or lower, and then carry out finishing rolling for two passes or more at a temperature of 800 °C or higher and 1100 °C or lower. The total rolling reduction in the finishing rolling is preferably 80 % or more. By setting the total rolling reduction at 80 % or more in the temperature range of 1100 °C or lower, dislocations are introduced at a high density in the hot-rolled steel sheet. Dislocations serve as nucleation sites for precipitates, contributing to the formation of fine and high-density precipitates, which enhances the magnetic properties. The temperature in hot rolling is based on a surface temperature of the steel sheet.

The hot-rolled steel sheet obtained by the hot rolling is preferably coiled to facilitate handling. The coiling temperature of the hot-rolled steel sheet is preferably set to 400 °C or higher and 750 °C or lower, from both the perspective of controlling the microstructure of carbides and preventing defects such as cracks. The coiling temperature is more preferably 500 °C or higher. The coiling temperature is more preferably 700 °C or lower. The coiling temperature of the hot-rolled steel sheet is based on a temperature of the steel sheet surface just before coiling.

As mentioned above, in the method of producing a grain-oriented electrical steel sheet according to the present disclosure, the sol. Al content dissolved in the steel slab is decreased to less than 100 ppm. Therefore, in the hot rolling process, hardly any of the N dissolved in the steel slab combines with sol. Al, and instead combines with the Si contained in the steel slab to form silicon nitride Si₃N₄. NPL 1 describes results of investigating the solubility of nitrogen in Fe-Si alloy. According to this, the maximum temperature at which Si₃N₄ can stably exist in Fe-Si alloy is expressed as a function of the Si content in the Fe-Si alloy. For example, when the Si content is 3 %, Si₃N₄ is considered to stably exist at a temperature range of approximately 900 °C or lower.

### <Hot-rolled sheet annealing>

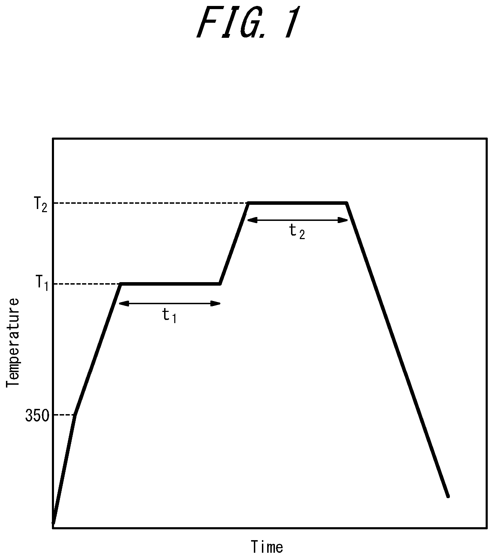

The method of producing a grain-oriented electrical steel sheet according to the present disclosure then includes subjecting the hot-rolled steel sheet to hot-rolled sheet annealing to produce a hot-rolled and annealed sheet. The hot-rolled sheet annealing according to the present disclosure is conducted with the aim of replacing the Si contained in the Si₃N₄ precipitates formed in the steel during the hot rolling process with sol. Al to form AlN. FIG. 1 is a graph for explaining the temperature profile of hot-rolled sheet annealing. As illustrated in FIG. 1, in the hot-rolled sheet annealing, the hot-rolled steel sheet is subjected to a first stage soaking, at least once, by holding at a soaking temperature of 350 °C or higher and 1000 °C or lower for a soaking time of 3.5 s or longer and 120 s or shorter, and then subjected to a second stage soaking by holding at a soaking temperature higher than 1000 °C and 1100 °C or lower. With reference to FIG. 1 where appropriate, the heat treatment conditions in each temperature range are explained in detail below.

### 1. Temperature range from 50 °C to 350 °C

In the method of producing a grain-oriented electrical steel sheet according to the present disclosure, it is preferable that an average heating rate when heating the hot-rolled steel sheet from 50 °C to 350 °C during the hot-rolled sheet annealing is 50 °C/s or more. Hereinafter, "average heating rate" refers to an averaged heating rate in a certain temperature range, specifically, the value obtained by dividing the difference between the minimum and maximum temperatures in that temperature range by the time taken for heating. The temperature range from 50 °C to 350 °C corresponds to the stage just before the first stage soaking. By rapidly heating the hot-rolled steel sheet in this temperature range at the average heating rate of 50 °C/s or more, coarsening of Si₃N₄ is prevented, and the fine precipitates of Si₃N₄ can be maintained in a densely distributed state while starting the first stage soaking. This allows for an improvement in the magnetic flux density of the steel sheet. The upper limit of the average heating rate when heating from 50 °C to 350 °C is not particularly restricted. The average heating rate can be 500 °C/s or less.

According to the present disclosure, the heating rate of the hot-rolled steel sheet in the temperature range below 50 °C has little effect on the morphology of Si₃N₄ precipitates. Therefore, even when starting to heat from a temperature below 50 °C, the lower limit of the temperature range for evaluating the average heating rate may be 50 °C.

### 2. Temperature range from 350 °C to 1000 °C

The method of producing a grain-oriented electrical steel sheet according to the present disclosure includes, in the hot-rolled sheet annealing, subjecting the hot-rolled steel sheet to the first stage soaking, at least once, by holding at a soaking temperature of 350 °C or higher and 1000 °C or lower for a soaking time of 3.5 s (seconds) or longer and 120 s or shorter. As illustrated in FIG. 1, the first stage soaking is carried out after the heating from 50 °C to 350 °C in the previous process is completed, heating the hot-rolled steel sheet to the soaking temperature T₁ and holding for the soaking time t₁. When T₁ is lower than 350 °C, diffusion of Al proceeds with difficulty, and the precipitation of AlN does not proceed, resulting in a decrease in the magnetic flux density. When T₁ exceeds 1000 °C, the dissolution of Si₃N₄ occurs before the precipitation of AlN, leading to a decrease in the magnetic flux density of the steel sheet. Therefore, the soaking temperature T₁ is set to 350 °C or higher and 1000 °C or lower. The soaking temperature T₁ is preferably 400 °C or higher. The soaking temperature T₁ is more preferably 500 °C or higher. The soaking temperature T₁ is preferably 900 °C or lower.

When the first stage soaking is not carried out at all or when the first stage soaking time t₁ is shorter than 3.5 s, there is insufficient time for the substitution of Si in the Si₃N₄ precipitates by sol. Al, resulting in a decrease in the magnetic flux density of the steel sheet. When the first stage soaking time t₁ exceeds 120 s, excessive precipitation or coarsening of AlN decreases the magnetic flux density of the steel sheet. The first stage soaking time t₁ is therefore set to 3.5 s or longer and 120 s or shorter. The soaking time t₁ is preferably 5.0 s or longer. The soaking time t₁ is preferably 60 s or shorter. The soaking time t₁ is more preferably 30 s or shorter.

The reason why the magnetic flux density of the steel sheet improves when a short soaking is carried out compared to heating in the temperature range from 350 °C to 1000 °C at a constant average heating rate is not clearly understood, but the inventors consider this to be as follows. In soaking, the substitution of Si in Si₃N₄ by sol. Al progresses for a certain time, and Ostwald ripening occurs at the stage when sol. Al reaches a saturated precipitation state. As a result, the AlN particle size becomes uniform, and the magnetic flux density improves. In contrast, during heating, the solubility of Si contained in Si₃N₄ is promoted with the increase in temperature, leading to early substitution by sol. Al. In this case, the AlN particle size becomes non-uniform from the outset, and therefore it becomes more difficult to homogenize the AlN particle size in the subsequent processing compared to soaking. Consequently, the magnetic flux density decreases. Therefore, instead of continuously raising the temperature in the range from 350 °C to 1000 °C, soaking is essential for improving the magnetic flux density.

Hereinafter, "soaking" refers to maintaining the temperature of the hot-rolled steel sheet at a constant target temperature during hot-rolled sheet annealing. Here, according to the present disclosure, when the steel sheet temperature is within ±5.0 °C of a target temperature, the steel sheet is treated as having undergone "soaking" for the time it remains within that range. The temperature of the hot-rolled steel sheet during hot-rolled sheet annealing can be measured by known methods.

In the method of producing a grain-oriented electrical steel sheet according to the present disclosure, the number of times the first stage soaking is carried out may be once, or two or more times. When the first stage soaking is carried out two or more times, a cooling period may be provided between the soakings. The temperature for the second and subsequent soakings may be the same as the temperature of the first soaking, or may be a higher or lower temperature than that of the first soaking, as long as the temperature is in the range of 350 °C to 1000 °C. When carrying out the first stage soaking multiple times, the soaking time for each instance is set to 3.5 s or longer and 120 s or shorter.

In the temperature range of the hot-rolled sheet annealing, AlN is more stable when compared to Si₃N₄ precipitates. Therefore, the substitution reaction of Si in Si₃N₄ precipitates to sol. Al occurs irreversibly, and once AlN is formed, it does not revert to Si₃N₄ precipitates. Accordingly, the opportunity to generate fine AlN from Si₃N₄ precipitates is limited to the hot-rolled sheet annealing process.

### 3. Temperature higher than 1000 °C and 1100 °C or lower

The method of producing a grain-oriented electrical steel sheet according to the present disclosure includes, in the hot-rolled sheet annealing, subjecting the hot-rolled steel sheet to the second stage soaking by holding at a soaking temperature higher than 1000 °C and 1100 °C or lower. As illustrated in FIG. 1, the second stage soaking is carried out after the completion of the first stage soaking in the previous process, increasing the temperature of the hot-rolled steel sheet to a soaking temperature T₂ and holding for a soaking time t₂. This holding allows the precipitate diameter of AlN to be optimized by Ostwald ripening. When the soaking temperature T₂ is 1000 °C or lower, the adjustment of the precipitate diameter by Ostwald ripening is insufficient, leading to a deterioration of function as an inhibitor and a decrease in magnetic flux density. When the soaking temperature T₂ exceeds 1100 °C, the AlN excessively coarsens or re-solubilizes, degrading function as an inhibitor and decreasing the magnetic flux density. The soaking temperature T₂ is therefore set to higher than 1000 °C and 1100 °C or lower. The soaking temperature T₂ is preferably 1050 °C or lower. The second stage soaking time t₂ is not particularly limited. The soaking time t₂ is preferably 10 s or longer. The soaking time t₂ is preferably 60 s or shorter.

### 4. Shape of hot-rolled steel sheet in hot-rolled sheet annealing

As mentioned above, in the hot-rolled sheet annealing, rapid heating or cooling and soaking of the hot-rolled steel sheet is repeatedly applied. When the hot-rolled steel sheet is coiled into a coil shape after the hot rolling, it can be uncoiled to return to the original shape of the hot-rolled steel sheet, and rapid heating or cooling can be carried out by conducting hot-rolled sheet annealing using a known continuous annealing furnace. Carrying out the hot-rolled sheet annealing in the shape of a hot-rolled steel sheet is also preferable for achieving appropriate temperature control with little temperature variation during soaking after rapid heating or cooling.

### <Cold rolling>

The method of producing a grain-oriented electrical steel sheet according to the present disclosure includes subjecting the hot-rolled and annealed sheet to cold rolling once or twice or more with intermediate annealing, to obtain a cold-rolled steel sheet having a final sheet thickness. The final sheet thickness of the cold-rolled steel sheet is preferably 0.30 mm or less. When the final sheet thickness of the cold-rolled steel sheet is 0.30 mm or less, eddy current loss can be decreased. The final sheet thickness of the cold-rolled steel sheet is more preferably 0.23 mm or less. The final sheet thickness of the cold-rolled steel sheet is even more preferably 0.20 mm or less. There is no specific lower limit for the final sheet thickness of the cold-rolled steel sheet. The final sheet thickness in cold rolling is generally technically limited to about 0.10 mm or more.

The number of times cold rolling is carried out may be once or twice or more. When carrying out cold rolling twice or more, intermediate annealing is conducted between the cold rolling processes. The intermediate annealing is preferably conducted under conditions where the annealing temperature is 900 °C or higher and 1200 °C or lower. When the annealing temperature is 900 °C or higher, the recrystallized grains do not become too fine, and the nuclei having Goss orientation in the primary recrystallized texture increase, improving the magnetic flux density of the steel sheet. When the annealing temperature is 1200 °C or lower, the recrystallized grains do not coarsen, allowing for a well-sized primary recrystallized texture, which also improves the magnetic flux density of the steel sheet. In the final stage of cold rolling, it is preferable to heat the steel sheet to a temperature of 100 °C or higher and 300 °C or lower for warm rolling, or carry out aging treatment at a temperature of 100 °C or higher and 300 °C or lower once or multiple times between passes, in order to enhance the integration degree of the recrystallized texture and improve the magnetic flux density of the steel sheet.

In the cold rolling, rolling for a rolling reduction of 80 % or more is preferably carried out at least once. Carrying out cold rolling with a rolling reduction of 80 % or more is advantageous in that the integration degree of the recrystallized texture increases, thereby improving the magnetic flux density of the steel sheet.

### <Primary recrystallization annealing>

The method of producing a grain-oriented electrical steel sheet according to the present disclosure includes subjecting the cold-rolled steel sheet to primary recrystallization annealing to obtain a primary recrystallization annealed sheet. The primary recrystallization annealing may also serve as decarburization annealing. Decarburization is preferably carried out with the annealing temperature for primary recrystallization annealing set to 800 °C or higher and 900 °C or lower, and a wet atmosphere. However, when the C content in the steel slab is 0.0050 % or less, there is no need to further decrease the C content, and the atmosphere for primary recrystallization annealing may be different from the above. The average heating rate up to the holding temperature in the primary recrystallization annealing being set to 50 °C/s or more and 400 °C/s or less is preferable for enhancing the magnetic flux density of the steel sheet.

### <Secondary recrystallization annealing>

The method of producing a grain-oriented electrical steel sheet according to the present disclosure includes applying an annealing separator to a surface of the primary recrystallization annealed sheet, then subjecting the primary recrystallization annealed sheet to secondary recrystallization annealing. An annealing separator mainly composed of MgO is used as the annealing separator. Through secondary recrystallization annealing, it is possible to develop secondary recrystallized grains with Goss orientation and to form a forsterite film on the surface of the steel sheet. Secondary recrystallization annealing is preferably carried out at a temperature of 800 °C or higher for 20 h or longer and induce and complete the secondary recrystallization. To form a forsterite film, the temperature of the secondary recrystallization annealing is preferably set to 1200 °C or higher.

### <Post-treatment>

After carrying out the secondary recrystallization annealing, water washing, brushing, or pickling is conducted to remove the annealing separator adhered to the surface of the steel sheet. Subsequently, carrying out flattening annealing to adjust the shape of the steel sheet is effective for decreasing iron loss.

In the case of using the steel sheet in a stacked state, in order to improve iron loss properties, it is effective to apply an insulation coating to the steel sheet surface before or after flattening annealing. In such a case, applying a coating that can impart tension to the steel sheet is preferable for decreasing iron loss. As a coating method that can impart tension to the steel sheet, methods such as applying a tension coating through a binder in the coating or depositing inorganic material on the surface layer of the steel sheet by physical vapor deposition or chemical vapor deposition can be employed. Such coatings are preferable because they have excellent adhesion properties and provide excellent iron loss reduction effects.

For a further decrease in iron loss, it is preferable to carry out magnetic domain refining treatment. As a method for magnetic domain refining treatment, for example, typically implemented methods that apply strain to the steel sheet as a finished product using an electron beam or laser can be adopted. The target of magnetic domain refining treatment need not only be the steel sheet as a finished product and may be an intermediate product such as a cold-rolled steel sheet that has reached the final sheet thickness.

### EXAMPLES

The following describes examples of the present disclosure. Embodiments of the present disclosure are not limited to the following examples, and can be modified as desired without departing from the scope of the present disclosure.

### <Examples 1>

Steel slabs having a chemical composition, in mass ratio, consisting of C: 0.055 %, Si: 3.2 %, Mn: 0.12 %, sol. Al: 80 ppm, N: 35 ppm, and S: 32 ppm, with the balance being Fe and inevitable impurity, were produced by continuous casting, heated to 1200 °C for 60 min, and then hot rolled to obtain hot-rolled steel sheets having a thickness of 2.3 mm. For the obtained hot-rolled steel sheets, hot-rolled sheet annealing was carried out according to the temperature pattern illustrated in FIG. 1. The average heating rate from 50 °C to 350 °C was set to 50 °C/s. The first stage soaking time t₁ was fixed at 30 s, and the soaking temperature T₁ was varied from 300 °C to 1020 °C. The second stage soaking temperature T₂ was set to 1030 °C, and the soaking time t₂ was set to 30 s. The atmosphere for the hot-rolled sheet annealing was set to a dry nitrogen atmosphere. After removing scale from the surface of the hot-rolled and annealed sheet by pickling, cold rolling was carried out to obtain cold-rolled steel sheets having a final sheet thickness of 0.23 mm.

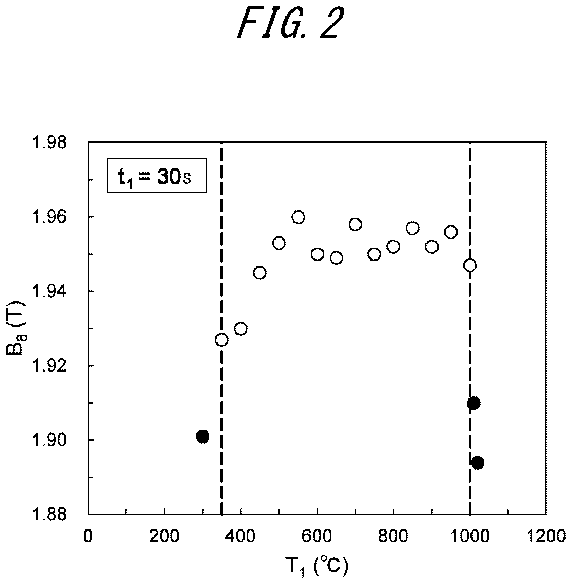

Next, the obtained cold-rolled steel sheets were subjected to primary recrystallization annealing combined with decarburization annealing at 830 °C for 150 s under a wet atmosphere of 50 vol% N₂ - 50 vol% H₂ with a dew point of 50 °C, resulting in primary recrystallization annealed sheets. Next, a mainly MgO annealing separator was applied to the surface of the obtained primary recrystallization annealed sheets, and secondary recrystallization annealing was carried out at 1200 °C for 5 h (hours) under a hydrogen atmosphere, obtaining 17 samples of grain-oriented electrical steel sheets with different temperatures for the first stage soaking. Next, for the obtained samples, the magnetic flux density B₈ was measured when the magnetic field strength applied to the sample was 800 A/m, according to a method specified in Japanese Industrial Standard JIS C 2500. The relationship between the first stage soaking temperature T₁ and the magnetic flux density B₈ is illustrated in FIG. 2.

According to FIG. 2, it can be seen that an excellent magnetic flux density B₈ of 1.925 T or more was obtained in the range indicated by the dashed lines, where the first stage soaking temperature T₁ is 350 °C or more and 1000 °C or less.

### <Examples 2>

Steel slabs having a chemical composition, in mass ratio, consisting of C: 0.048 %, Si: 3.3 %, Mn: 0.12 %, sol. Al: 83 ppm, N: 41 ppm, and S: 30 ppm, with the balance being Fe and inevitable impurity, were produced by continuous casting, heated to 1230 °C for 60 min, and then hot rolled to obtain hot-rolled steel sheets having a thickness of 2.3 mm. For the obtained hot-rolled steel sheets, hot-rolled sheet annealing was carried out according to the temperature pattern illustrated in FIG. 1. The average heating rate from 50 °C to 350 °C was set to 50 °C/s. The first stage soaking temperature T₁ was fixed at 750 °C, and the soaking time t₁ was varied from 0 s to 120 s. The second stage soaking temperature T₂ was set to 1010 °C, and the soaking time t₂ was set to 30 s. The atmosphere for the hot-rolled sheet annealing was set to a dry nitrogen atmosphere. After removing scale from the surface of the hot-rolled and annealed sheet by pickling, cold rolling was carried out to obtain cold-rolled steel sheets having a final sheet thickness of 0.23 mm.

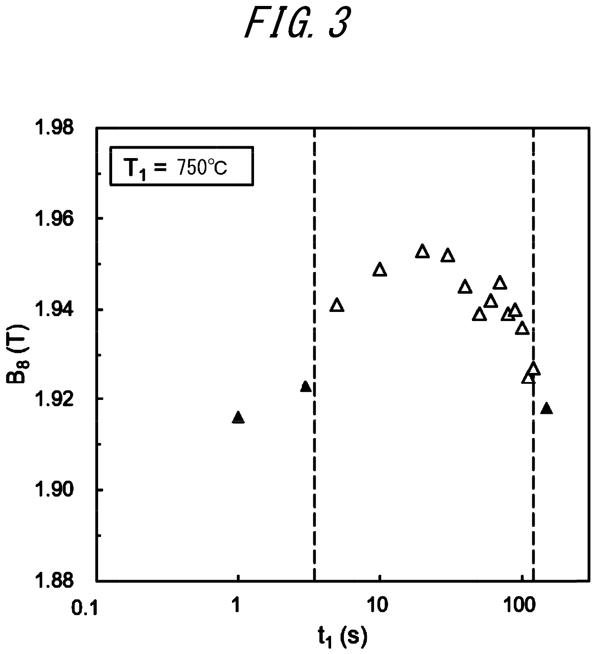

Next, the obtained cold-rolled steel sheets were subjected to primary recrystallization annealing and secondary recrystallization annealing under the same conditions as for Examples 1, obtaining 16 samples of grain-oriented electrical steel sheets with different times for the first stage soaking. Next, for the obtained samples, the magnetic flux density B₈ was measured using the same method as for Examples 1. The relationship between the first stage soaking time t₁ and the magnetic flux density B₈ is illustrated in FIG. 3. In FIG. 3, the scale of the soaking time t₁ on the horizontal axis is set to a logarithmic scale.

According to FIG. 3, it can be seen that an excellent magnetic flux density B₈ of 1.925 T or more was obtained in the range indicated by the dashed lines, where the first stage soaking time t₁ is 3.5 s or longer and 120 s or shorter.

### <Examples 3>

Steel slabs having a chemical composition, in mass ratio, consisting of C: 0.035 %, Si: 3.3 %, Mn: 0.13 %, sol. Al: 75 ppm, N: 42 ppm, S: 11 ppm, and Sb: 0.075 %, with the balance being Fe and inevitable impurity, were produced by continuous casting, heated to 1160 °C for 60 min, and then hot rolled to obtain hot-rolled steel sheets having a thickness of 2.4 mm. For the obtained hot-rolled steel sheets, hot-rolled sheet annealing was carried out according to the temperature pattern illustrated in FIG. 1. However, unlike FIG. 1, the average heating rate from 50 °C to 350 °C was varied in a range from 20 °C/s to 100 °C/s. Table 1 lists the average heating rates from 50 °C to 350 °C, the first stage soaking temperature T₁ and soaking time t₁, as well as the second stage soaking temperature T₂ and soaking time t₂. The atmosphere for the hot-rolled sheet annealing was set to a dry nitrogen atmosphere. After removing scale from the surface of the hot-rolled and annealed sheets by pickling, cold rolling was carried out to achieve a thickness of 1.6 mm. Next, intermediate annealing was carried out under a wet atmosphere of 70 vol% N₂ - 30 vol% H₂ with a dew point of 40 °C, followed by cold rolling to obtain cold-rolled steel sheets having a final sheet thickness of 0.20 mm.

Next, the obtained cold-rolled steel sheets were subjected to primary recrystallization annealing combined with decarburization annealing at 850 °C for 60 s under a wet atmosphere of 50 vol% N₂ - 50 vol% H₂ with a dew point of 50 °C, resulting in primary recrystallization annealed sheets. Next, a mainly MgO annealing separator was applied to the surface of the obtained primary recrystallization annealed sheets, and secondary recrystallization annealing was carried out at 1220 °C for 5 h under a hydrogen atmosphere, obtaining 40 samples of grain-oriented electrical steel sheets with different production conditions. Next, for the obtained samples, the magnetic flux density B₈ was measured using the same method as for Examples 1. Results are listed in Table 1.

### [Table 1]

**Table 1**

| No. | Average heating rate from 50 °C to 350 °C (°C/s) | First stage soaking | | Second stage soaking | | Magnetic flux density B₈ (T) | Remarks |
|---|---|---|---|---|---|---|---|
| | | Soaking temperature T₁ (°C) | Soaking time t₁ (s) | Soaking temperature T₂ (°C) | Soaking time t₂ (s) | | |
| 1 | 50 | 310 | 30 | 1020 | 25 | 1.886 | Comparative Example |
| 2 | 50 | no soaking | no soaking | 1020 | 25 | 1.889 | Comparative Example |
| 3 | 50 | 320 | 25 | 1020 | 25 | 1.912 | Comparative Example |
| 4 | 50 | 743 | 80 | 1020 | 25 | 1.943 | Example |
| 5 | 50 | 300 | 85 | 1020 | 25 | 1.913 | Comparative Example |
| 6 | 50 | 760 | 90 | 1010 | 25 | 1.948 | Example |
| 7 | 50 | 650 | 70 | 1020 | 25 | 1.949 | Example |
| 8 | 50 | 400 | 110 | 1020 | 25 | 1.942 | Example |
| 9 | 50 | 750 | 82 | 1010 | 25 | 1.947 | Example |
| 10 | 50 | 960 | 105 | 1020 | 25 | 1.928 | Example |
| 11 | 50 | 1060 | 50 | 1020 | 25 | 1.905 | Comparative Example |
| 12 | 50 | 490 | 7.2 | 1020 | 25 | 1.950 | Example |
| 13 | 50 | 865 | 100 | 1020 | 25 | 1.950 | Example |
| 14 | 50 | 420 | 60 | 1020 | 25 | 1.943 | Example |
| 15 | 50 | 900 | 2.5 | 1020 | 25 | 1.885 | Comparative Example |
| 16 | 50 | 400 | 60 | 1020 | 25 | 1.948 | Example |
| 17 | 50 | 580 | 70 | 1020 | 25 | 1.948 | Example |
| 18 | 50 | 330 | 100 | 1020 | 25 | 1.896 | Comparative Example |
| 19 | 50 | 430 | 70 | 1020 | 25 | 1.947 | Example |
| 20 | 50 | 800 | 90 | 1020 | 25 | 1.950 | Example |
| 21 | 20 | 400 | 80 | 1020 | 25 | 1.927 | Example |
| 22 | 20 | 800 | 40 | 1020 | 25 | 1.926 | Example |
| 23 | 50 | 800 | 40 | 1020 | 25 | 1.937 | Example |
| 24 | 70 | 800 | 40 | 1020 | 25 | 1.935 | Example |
| 25 | 100 | 800 | 40 | 1020 | 25 | 1.939 | Example |
| 26 | 50 | 700 | 3.5 | 1020 | 25 | 1.942 | Example |
| 27 | 50 | 700 | 5.6 | 1020 | 25 | 1.951 | Example |
| 28 | 50 | 700 | 30 | 1020 | 25 | 1.955 | Example |
| 29 | 50 | 700 | 60 | 990 | 25 | 1.892 | Comparative Example |
| 30 | 50 | 700 | 60 | 1020 | 25 | 1.950 | Example |
| 31 | 50 | 700 | 60 | 1080 | 25 | 1.946 | Example |
| 32 | 50 | 700 | 90 | 1020 | 25 | 1.941 | Example |
| 33 | 50 | 700 | 110 | 1020 | 25 | 1.944 | Example |
| 34 | 50 | 700 | 150 | 1020 | 25 | 1.910 | Comparative Example |
| 35 | 50 | 700 | 60 | 1120 | 25 | 1.879 | Comparative Example |
| 36 | 50 | 700 | 60 | 1040 | 5 | 1.928 | Example |
| 37 | 50 | 700 | 60 | 1040 | 15 | 1.943 | Example |
| 38 | 50 | 700 | 60 | 1040 | 30 | 1.951 | Example |
| 39 | 50 | 700 | 60 | 1040 | 60 | 1.952 | Example |
| 40 | 50 | 700 | 60 | 1040 | 80 | 1.931 | Example |

| | | | | | | | |
|---|---|---|---|---|---|---|---|
| Underlining indicates value outside scope of present disclosure. | | | | | | | |

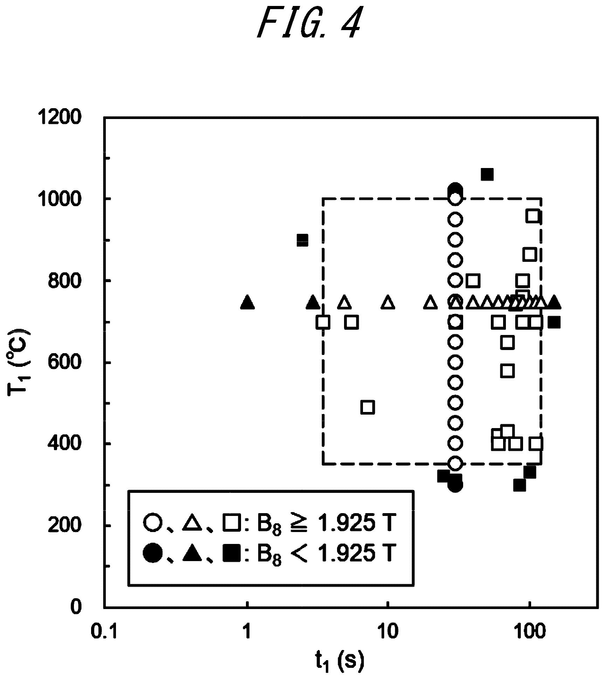

Further, among the results listed in Table 1, results excluding samples No. 2, No. 29, and No. 35 were plotted on a graph with the horizontal axis as the soaking time t₁ and the vertical axis as the soaking temperature T₁, as illustrated in FIG. 4. In FIG. 4, the scale of the soaking time t₁ on the horizontal axis is set to a logarithmic scale. In FIG. 4, the white squares represent examples where the magnetic flux density B₈ is 1.925 T or more. The black squares represent comparative examples where the magnetic flux density B₈ is less than 1.925 T. Further, in FIG. 4, the examples and comparative examples of Examples 1 are plotted with white circles and black circles, respectively, while the examples and comparative examples of Examples 2 are plotted with white triangles and black triangles, respectively.

According to FIG. 4, it can be seen that an excellent magnetic flux density B₈ of 1.925 T or more was obtained in the range indicated by the dashed line, where the first stage soaking temperature T₁ is 350 °C or more and 1000 °C or less, and the soaking time t₁ is 3.5 s or longer and 120 s or shorter.

### <Examples 4>

Steel slabs having a chemical composition consisting of the essential and additive components listed in Table 2, with the balance being Fe and inevitable impurity, were produced by continuous casting, heated to 1200 °C for 60 min, and then hot rolled to obtain hot-rolled steel sheets having a thickness of 2.5 mm. For the obtained hot-rolled steel sheets, hot-rolled sheet annealing was carried out according to the temperature pattern illustrated in FIG. 1. The average heating rate from 50 °C to 350 °C was set to 50 °C/s. The first stage soaking temperature T₁ was set to 750 °C, and the soaking time t₁ was set to 20 s. The second stage soaking temperature T₂ was set to 1030 °C, and the soaking time t₂ was set to 30 s. The atmosphere for the hot-rolled sheet annealing was set to a wet atmosphere of 80 vol% N₂ - 20 vol% CO₂ with a dew point of 30 °C. After removing the scale from the surface of the hot-rolled and annealed sheets by pickling, warm rolling was carried out at 150 °C followed by cold rolling to obtain cold-rolled steel sheets having a final sheet thickness of 0.27 mm.

Next, the obtained cold-rolled steel sheets were subjected to primary recrystallization annealing combined with decarburization annealing at 850 °C for 180 s under a wet atmosphere of 40 vol% N₂ - 60 vol% H₂ with a dew point of 50 °C, resulting in primary recrystallization annealed sheets. Next, a mainly MgO annealing separator was applied to the surface of the obtained primary recrystallization annealed sheets, and secondary recrystallization annealing was carried out at 1175 °C for 15 h under a hydrogen atmosphere, obtaining 25 samples of grain-oriented electrical steel sheets with different chemical compositions. Next, for the obtained samples, the magnetic flux density B₈ was measured using the same method as for Examples 1. Results are listed in Table 2.

### [Table 2]

**Table 2**

| No. | Essential components | | | | | | Optional components (mass%) | Magnetic flux density B₈ (T) | Remarks |
|---|---|---|---|---|---|---|---|---|---|
| | C (mass%) | Si (mass%) | Mn (mass%) | sol. Al (ppm) | N (ppm) | S (ppm) | | | |
| 1 | 0.078 | 4.4 | 0.74 | 25 | 25 | 48 | - | 1.942 | Example |
| 2 | 0.079 | 3.0 | 0.13 | 23 | 14 | 15 | - | 1.959 | Example |
| 3 | 0.109 | 4.5 | 0.72 | 56 | 50 | 45 | - | 1.913 | Comparative Example |
| 4 | 0.032 | 6.6 | 0.97 | 17 | 12 | 44 | - | 1.902 | Comparative Example |
| 5 | 0.040 | 3.0 | 1.09 | 51 | 34 | 11 | - | 1.918 | Comparative Example |
| 6 | 0.099 | 3.8 | 0.47 | 104 | 20 | 42 | - | 1.908 | Comparative Example |
| 7 | 0.035 | 2.8 | 0.79 | 55 | 60 | 38 | - | 1.923 | Comparative Example |
| 8 | 0.057 | 4.6 | 0.91 | 65 | 25 | 58 | - | 1.915 | Comparative Example |
| 9 | 0.032 | 4.2 | 0.84 | 75 | 28 | 20 | - | 1.943 | Example |
| 10 | 0.0016 | 4.6 | 0.11 | 36 | 43 | 26 | - | 1.902 | Comparative Example |
| 11 | 0.013 | 1.9 | 0.73 | 97 | 47 | 23 | - | 1.886 | Comparative Example |
| 12 | 0.069 | 4.8 | 0.019 | 33 | 39 | 48 | - | 1.911 | Comparative Example |
| 13 | 0.086 | 2.9 | 0.24 | 23 | 14 | 50 | - | 1.954 | Example |
| 14 | 0.014 | 3.0 | 0.19 | 51 | 22 | 44 | - | 1.955 | Example |
| 15 | 0.040 | 2.1 | 0.38 | 52 | 28 | 24 | - | 1.950 | Example |
| 16 | 0.059 | 3.0 | 0.71 | 12 | 19 | 24 | - | 1.953 | Example |
| 17 | 0.075 | 2.2 | 0.94 | 81 | 39 | 27 | - | 1.940 | Example |
| 18 | 0.047 | 4.0 | 0.69 | 99 | 49 | 40 | - | 1.939 | Example |
| 19 | 0.038 | 5.1 | 0.13 | 82 | 35 | 29 | - | 1.939 | Example |
| 20 | 0.046 | 3.8 | 0.24 | 94 | 15 | 17 | - | 1.953 | Example |
| 21 | 0.058 | 3.9 | 0.60 | 20 | 40 | 50 | Sb: 0.03, Ni: 0.01 | 1.939 | Example |
| 22 | 0.042 | 3.5 | 0.17 | 60 | 10 | 20 | Sn: 0.03, Cu: 0.02, Cr: 0.03 | 1.954 | Example |
| 23 | 0.088 | 3.4 | 0.05 | 70 | 30 | 10 | P: 0.06, Mo: 0.01 | 1.954 | Example |
| 24 | 0.064 | 3.6 | 0.54 | 70 | 10 | 10 | Ti: 0.001, Bi: 0.006 | 1.953 | Example |
| 25 | 0.082 | 4.1 | 0.04 | 40 | 30 | 50 | Nb: 0.0007, Se: 0.0045 | 1.952 | Example |
| 26 | 0.085 | 4.4 | 0.50 | 28 | 40 | 39 | B: 0.0015 | 1.948 | Example |
| 27 | 0.066 | 5.3 | 0.06 | 32 | 12 | 21 | V: 0.014 | 1.944 | Example |
| 28 | 0.057 | 2.8 | 0.59 | 52 | 29 | 45 | Pb: 0.008 | 1.952 | Example |
| 29 | 0.077 | 4.0 | 0.18 | 84 | 19 | 43 | As: 0.009 | 1.936 | Example |
| 30 | 0.057 | 5.0 | 0.71 | 16 | 11 | 45 | Zn: 0.0032 | 1.941 | Example |
| 31 | 0.074 | 3.2 | 0.61 | 66 | 10 | 48 | Ca: 0.004 | 1.949 | Example |
| 32 | 0.055 | 3.1 | 0.71 | 66 | 44 | 30 | Sb: 0.06, Ti: 0.002 | 1.951 | Example |
| 33 | 0.046 | 4.2 | 0.15 | 37 | 34 | 24 | P: 0.04, Nb: 0.0025 | 1.946 | Example |
| 34 | 0.088 | 6.2 | 0.16 | 91 | 38 | 36 | Ni: 0.02, V: 0.022 | 1.940 | Example |
| 35 | 0.007 | 5.5 | 0.81 | 27 | 14 | 29 | Cu: 0.03, Ca: 0.002 | 1.943 | Example |
| Underlining indicates value outside scope of present disclosure. | | | | | | | | | |

According to Table 2, it can be seen that for the samples of grainoriented electrical steel sheets produced by the production method defined in the present disclosure using steel stabs having the chemical composition or preffered chemical composition specified in the present disclosure, an excellent magnetic flux density B₈ of 1.925T or more was obtained.

### REFERENCE SIGNS LIST

- T₁: first stage soaking temperature
- t₁: first stage soaking time
- T₂: second stage soaking temperature
- t₂: second stage soaking time

## Claims

1. A method of producing a grain-oriented electrical steel sheet, the method comprising:
preparing a steel slab having a chemical composition containing, in mass ratio,
C: 0.0020 % or more and 0.100 % or less,
Si: 2.0 % or more and 6.5 % or less,
Mn: 0.020 % or more and 1.00 % or less,
sol. Al: 10 ppm or more and less than 100 ppm,
N: 10 ppm or more and 50 ppm or less, and
S: 10 ppm or more and 50 ppm or less,
with the balance being Fe and inevitable impurity;
after heating the steel slab to a temperature of 1300 °C or lower, subjecting the steel slab to hot rolling to obtain a hot-rolled steel sheet;
subjecting the hot-rolled steel sheet to hot-rolled sheet annealing to obtain a hot-rolled and annealed sheet;
subjecting the hot-rolled and annealed sheet to cold rolling once or twice or more with intermediate annealing, to obtain a cold-rolled steel sheet having a final sheet thickness;
subjecting the cold-rolled steel sheet to primary recrystallization annealing to obtain a primary recrystallization annealed sheet; and
after applying an annealing separator to a surface of the primary recrystallization annealed sheet, subjecting the primary recrystallization annealed sheet to secondary recrystallization annealing,
wherein, in the hot-rolled sheet annealing,
the hot-rolled steel sheet is subjected to a first stage soaking, at least once, by holding at a soaking temperature of 350 °C or higher and 1000 °C or lower for a soaking time of 3.5 s or longer and 120 s or shorter, and
the hot-rolled steel sheet is subjected to a second stage soaking by holding at a soaking temperature higher than 1000 °C and 1100 °C or lower.

2. The method of producing a grain-oriented electrical steel sheet according to claim 1, wherein, in the hot-rolled sheet annealing, an average heating rate when heating the hot-rolled steel sheet from 50 °C to 350 °C is set to 50 °C/s or more.

3. The method of producing a grain-oriented electrical steel sheet according to claim 1 or 2, wherein the chemical composition further contains, in mass ratio, one or more selected from the group consisting of
Sb: 0.01 % or more and 0.50 % or less,
Sn: 0.01 % or more and 0.50 % or less,
Ni: 0.005 % or more and 1.5 % or less,
Cu: 0.005 % or more and 1.5 % or less,
Cr: 0.005 % or more and 0.10 % or less,
P: 0.005 % or more and 0.50 % or less,
Mo: 0.005 % or more and 0.50 % or less,
Ti: 0.0005 % or more and 0.10 % or less,
Nb: 0.0005 % or more and 0.10 % or less,
Bi: 0.005 % or more and 0.10 % or less,
Se: 10 ppm or more and 50 ppm or less,
Ca: 0.0005 % or more and 0.0050 % or less,
B: 0.0001 % or more and 0.0020 % or less,
V: 0.0005 % or more and 0.10 % or less,
Pb: 0.0002 % or more and 0.050 % or less,
As: 0.0005 % or more and 0.010 % or less, and
Zn: 0.0005 % or more and 0.010 % or less.
